**Europäisches Patentamt**

**European Patent Office**

**Office européen des brevets**

(19)

(11) Numéro de publication: **0 148 699**
**B1**

(12) # FASCICULE DE BREVET EUROPÉEN

(45) Date de publication du fascicule du brevet:
**02.11.88**

(51) Int. Cl.⁴: **F 22 B 37/42,** F 28 F 9/02

(21) Numéro de dépôt: **84402711.0**

(22) Date de dépôt: **21.12.84**

(54) **Dispositif de détection et de localisation de fuite sur les tubes de faisceau d'un générateur de vapeur.**

(30) Priorité: **30.12.83 FR 8321082**

(43) Date de publication de la demande:
**17.07.85 Bulletin 85/29**

(45) Mention de la délivrance du brevet:
**02.11.88 Bulletin 88/44**

(84) Etats contractants désignés:
**BE DE FR GB IT NL**

(56) Documents cité:
**FR-A-2 382 667**
**GB-A-2 006 967**
**US-A-3 129 697**
**US-A-4 368 694**
**US-A-4 466 481**

**PATENTS ABSTRACTS OF JAPAN, vol. 6, no. 267
(M-182) 1145 , 25 décembre 1982, page 37M182; & JP -
A - 57 157 996 (BABCOCK HITACHI K.K.) 29.09.1982**

(73) Titulaire: **COMMISSARIAT A L'ENERGIE
ATOMIQUE, 31/33, rue de la Fédération, F-75015
Paris (FR)**

(84) Etats contractants désignés: **DE FR GB IT**

(73) Titulaire: **ELECTRICITE DE FRANCE Service
National, 2, rue Louis Murat, F-75008 Paris (FR)**

(84) Etats contractants désignés: **BE DE FR GB IT NL**

(72) Inventeur: **Libin, Bernard, 71, Avenue Auguste
Renoir, F-78160 Marly de Roi (FR)**

(74) Mandataire: **Mongrédien, André, c/o BREVATOME
25, rue de Ponthieu, F-75008 Paris (FR)**

EP 0 148 699 B1

## Description

L'invention concerne un dispositif de détection et de localisation de fuite sur les tubes du faisceau d'un générateur de vapeur.

Dans les réacteurs nucléaires à neutrons rapides, la chaleur dégagée par les assemblages combustibles du coeur du réacteur et utilisée pour la production de vapeur d'eau dans les générateurs de vapeur est généralement transportée et transmise à l'eau alimentaire pour sa vaporisation, par un fluide d'échange constitué par un métal liquide tel que du sodium.

Il faut éviter tout contact entre le sodium et l'eau ou la vapeur d'eau puisqu'une réaction chimique violente peut se produire lorsqu'ils sont mis en contact.

Il est donc souhaitable de disposer de moyens de détection et de localisation des fuites dans les générateurs de vapeur des réacteurs nucléaires à neutrons rapides. Ces moyens de détection et de localisation doivent permettre de repérer toute fuite dès son origine, avant qu'elle n'ait pu avoir des conséquences graves.

Les générateurs de vapeur effectuant des échanges de chaleur entre du sodium liquide et de l'eau comportent une enveloppe dans laquelle est placé un faisceau de tubes. Le sodium liquide chaud est introduit dans l'enveloppe, circule au contact de la surface externe des tubes du faisceau à l'intérieur desquels circule l'eau qui s'échauffe puis se vaporise sous l'effet de la chaleur du sodium liquide. Le sodium liquide froid ressort ensuite de l'enveloppe.

Les tubes du faisceau sont reliés à l'une de leurs extrémités à une boîte à eau ou à un tore de distribution et à leur autre extrémité à un collecteur ou à un tore de collectage de vapeur.

Dans certains générateurs de vapeur, les tubes du faisceau sont reliés à chacune de leurs extrémités à une ou deux plaques tubulaires limitant une boîte à eau ou un collecteur de vapeur que la (ou les, plaque(s) tubulaire(s) permet(tent) de séparer du volume intérieur de l'enveloppe du générateur de vapeur contenant le sodium liquide.

Les tubes du faisceau traversent la (ou les) plaque(s) tubulaire(s) sur tout ou partie de leur épaisseur et débouchent dans la boîte à eau ou le collecteur de vapeur d'un côté de la (ou des) plaque(s) tubulaire(s). De l'autre côté de la (ou des) plaque(s) tubulaire(s), ces tubes pénètrent dans le volume interne de l'enveloppe du générateur de vapeur renfermant le sodium liquide. Le sodium liquide circule en contact avec la surface externe des tubes du faisceau.

Dans certains générateurs de vapeur, en particulier du type décrit dans le document FR-A-2 540 971 (publié le 17.8.84), les tubes comportent une double paroi constituée par deux parois tubulaires coaxiales enfilées l'une sur l'autre. Une telle disposition permet de limiter la probabilité et les conséquences de fuites sur les tubes et d'en faciliter la détection. La détection de fuite peut se faire en particulier dans une chambre collectrice disposée à l'intérieur de l'enveloppe du générateur de vapeur une autre disposition consiste à réaliser la détection de fuite dans l'espace existant entre deux plaques tubulaires situées à une (ou aux deux) extrémité(s) du générateur de vapeur.

De tels moyens de détection imposent donc de prévoir des plaques tubulaires supplémentaires et sont difficilement applicables aux générateurs de vapeur comportant des tubes à simple paroi par ailleurs, la localisation d'une fuite nécessite l'introduction de moyens de mesure à l'intérieur du générateur de vapeur lui-même. Cette opération doit se faire lorsque le générateur de vapeur est à l'arrêt, ce qui peut entraîner la disparition de la fuite et donc rendre sa localisation impossible.

On connait également un dispositif de détection de fuite décrit dans le brevet des Etats-Unis n° 4 192 373 où le collectage des fluides résultant des fuites est réalisé au niveau des plaques tubulaires du générateur de vapeur. Ce dispositif a l'avantage de permettre une localisation de la fuite en utilisant une sonde de mesure mobile.

Le principe des dispositifs mentionnés ci-dessus est en effet de collecter les fluides résultant d'une fuite, tels que de la vapeur d'eau, dans un espace rempli d'un gaz neutre tel que l'hélium, en communication avec l'interstice entre les deux parois du tube. On utilise pour cela des détecteurs extrêmement sensibles à la présence du fluide tel que la vapeur d'eau qui donnent une indication dès qu'une trace de ce fluide révélatrice d'une rupture d'une des parois du tube est présente dans l'espace où l'on effectue la détection.

Dans le cas du dispositif du brevet américain 4 192 373, le détecteur est mobile et peut être mis en position successivement en face de chacun des tubes du faisceau, dans une plaque tubulaire. Le dispositif de ce brevet comporte un ensemble de canaux percés à l'intérieur d'une plaque tubulaire, entre les rangées de tubes. Ces canaux sont reliés par des perçages transversaux à des espaces annulaires disposés coaxialement aux tubes des deux rangées voisines du canal et en communication avec l'interstice entre les deux parois des tubes. La localisation d'une fuite nécessite le déplacement pas à pas de la sonde dans les canaux, ce qui ne permet pas un repérage rapide du tube sur lequel une fuite est apparue.

La détection des fuites est également réalisée au moyen de canaux reliant deux rangées de tubes voisines, à l'intérieur de la plaque tubulaire, dans le document FR-A-2 382 667. Dans ce cas, des détecteurs placés au bout des canaux localisent la zone de la plaque tubulaire dans laquelle s'est produit la fuite. Parallèlement, la superposition de deux espaces annulaires dans la plaque tubulaire permet de savoir si la fuite s'est produite du côté primaire ou du côté secondaire de l'échangeur.

Le but de l'invention est donc de proposer un dispositif de détection et de localisation de fuite sur les tubes du faisceau d'un générateur de vapeur comportant au moins une plaque tubulaire dans laquelle les tubes du faisceau sont fixés suivant un réseau régulier de façon qu'ils traversent tout ou partie de l'épaisseur de la plaque tubulaire, pour déboucher d'un côté de la plaque tubulaire dans une zone constituant une boîte à eau ou un collecteur de vapeur et qu'ils pénètrent, de l'autre côté de la plaque tubulaire, dans une zone renfermant un fluide d'échange apportant la chaleur de vaporisation, avec lequel les tubes sont en contact par leur surface externe, dispositif qui permet une détection et une localisation extrêmement rapides de fuite, dans les parties sensibles de tubes à simple paroi et sur la totalité de tubes à double paroi d'un générateur de vapeur, sans utilisation de moyens de mesure à l'intérieur du générateur de vapeur.

Le dispositif comporte tout d'abord d'une manière connue du document FR-A-2 382 667:

- pour chacun des tubes, dans une zone où ce tube est à l'intérieur de la plaque tubulaire, deux espaces annulaires coaxiaux au tube et espacés suivant sa longueur, de façon que les espaces annulaires relatifs à tous les tubes constituent deux ensembles situés dans deux zones différentes espacées suivant la direction axiale des tubes,

- deux ensembles de canaux de jonction entre les espaces annulaires des tubes d'une même rangée correspondant chacun à un ensemble d'espaces annulaires, les canaux d'un ensemble étant entièrement isolés les uns des autres, tous parallèles, et disposés suivant une direction du réseau des tubes,

- et des détecteurs de fluide disposés à l'extérieur de la plaque tubulaire et associés chacun à l'un des canaux de façon que chaque canal soit relié à un détecteur à l'une au moins de ses extrémités.

Conformément à l'invention, le but énoncé précédemment est atteint par le fait que:
- chacun des canaux de jonction relie les espaces annulaires d'une seule rangée de tubes ; et que les canaux des deux ensembles sont orientés selon deux directions différentes.

Afin de bien faire comprendre l'invention, on va maintenant décrire à titre d'exemples non limitatifs, en se référant aux figures jointes en annexe, plusieurs modes de réalisation de dispositifs suivant l'invention.

La figure 1a représente une vue en coupe d'une partie d'une plaque tubulaire au voisinage de deux tubes à simple paroi qui traversent cette plaque tubulaire dans laquelle sont usinés des canaux et des espaces annulaires d'un dispositif de détection suivant l'invention.

La figure 1b montre une variante de réalisation des canaux dans le cas d'une plaque en deux parties.

La figure 1c est une vue en coupe suivant CC de la figure 1b.

La figure 2a est une vue en coupe suivant AA de la figure 1a.

La figure 2b est une vue en coupe suivant BB de la figure 1a.

La figure 3 est une vue schématique d'une plaque tubulaire montrant la disposition d'un premier ensemble de canaux et de détecteurs dans sa partie gauche et d'un second ensemble de canaux et de détecteurs dans sa partie droite.

La figure 4 est une vue en coupe d'une plaque tubulaire au voisinage de deux tubes à double paroi montrant divers modes de réalisation des espaces annulaires du dispositif suivant l'invention.

La figure 5 est une vue en coupe d'une plaque tubulaire en deux parties, au voisinage de deux tubes à double paroi, montrant des variantes de réalisation des espaces annulaires et des canaux du dispositif suivant l'invention.

Sur la figure 1a, on voit une plaque tubulaire 1 d'un générateur de vapeur dans laquelle sont fixés les tubes 2 du faisceau à l'une de leurs extrémités. Cette plaque tubulaire est fixée à l'une des extrémités de l'enveloppe du générateur de vapeur dont elle limite la zone recevant du sodium liquide. La face intérieure 3 de cette plaque est en contact avec du sodium liquide alors que la face extérieure 4 est en contact avec de l'eau ou de la vapeur d'eau, suivant que la plaque 1 limite la boîte à eau dans laquelle arrive l'eau à vaporiser ou le collecteur de vapeur dans lequel arrive la vapeur produite dans les tubes 2 du faisceau. Les tubes 2 traversent tout ou partie de la plaque tubulaire 1 pour déboucher dans la boîte à eau (ou le collecteur de vapeur) du côté de la face 4 de la plaque tubulaire. Au-delà de la face 3, les tubes 2 pénètrent dans l'enveloppe du générateur de vapeur où leur surface externe est en contact avec le sodium liquide chaud en circulation dans cette enveloppe. L'eau pénétrant dans le tube à l'une de ses extrémités s'échauffe puis se vaporise avant de ressortir dans le collecteur de vapeur à l'extrémité de sortie du tube.

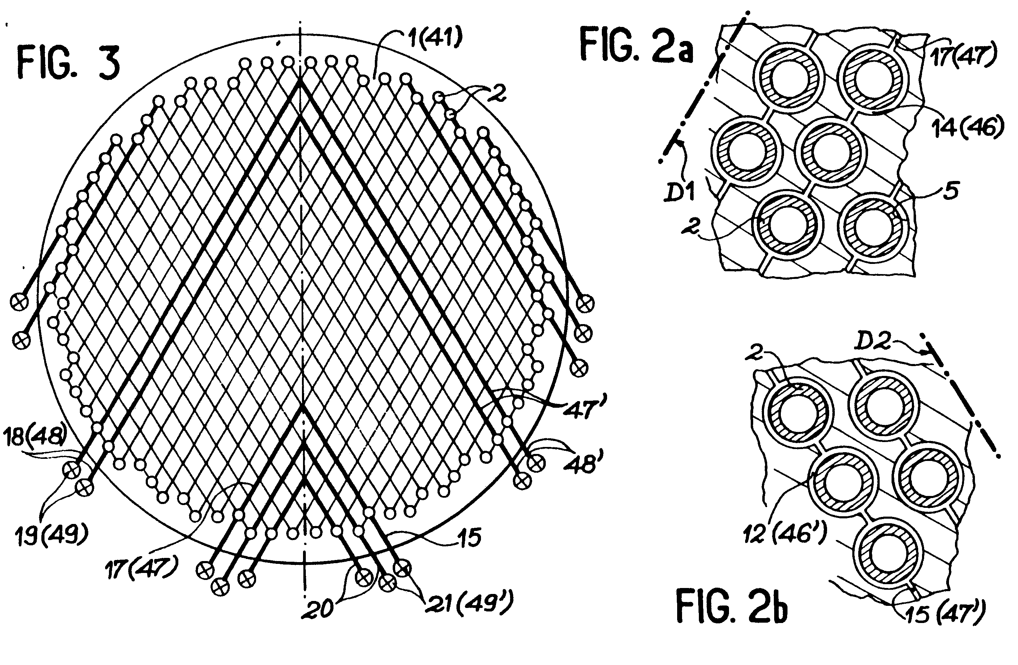

La plaque 1 est percée d'un réseau de trous de passage 5 des tubes 2 visibles aux figures 2 et 3. Ces trous 5 d'axe ZZ' sont disposés, dans les exemples décrits, suivant un réseau à mailles triangulaires comportant donc trois directions principales.

Les tubes 2 traversent la plaque tubulaire 1 sur toute son épaisseur et sont fixés, de manière totalement étanche au fluide, par soudure sur des manchons 7 et 8 saillants par rapport aux faces 3 et 4 de la plaque tubulaire 1, respectivement.

Les soudures correspondantes 9 et 10 assurent une fermeture étanche de l'interstice entre le tube 2 à simple paroi et le trou 5 de la plaque tubulaire 1.

Le diamètre extérieur du tube 2 est peu différent du diamètre intérieur du trou 5 mais le jeu de montage et la rugosité respective de la surface extérieure du tube 2 et de la surface du trou 5 font qu'il existe un interstice continu permettant le passage de gaz entre le tube 2 et le trou 5.

La zone des tubes 2 placée à l'intérieur des trous 5 de la plaque 1 et les soudures 9 et 10 constituent la zone la plus sensible du générateur de vapeur dans laquelle risquent de se produire des ruptures entraînant un défaut d'étanchéïté des tubes ou des soudures. Il importe donc de détecter les fuites éventuelles dans cette zone des tubes 2 et de localiser très rapidement les soudures ou les tubes défectueux.

On va maintenant décrire le dispositif de détection et de localisation de fuite en se référant aux figures 1a, 2a, 2b et 3.

A l'intérieur du trou 5 de la plaque 1, sont usinés autour de chacun des tubes 2 deux espaces annulaires 12 et 14 espacés suivant l'axe ZZ' du tube 2. L'espace annulaire 12 et l'espace annulaire 14 réalisés par alésage du trou 5 à un diamètre sensiblement supérieur au diamètre extérieur du tube 2 sont placés respectivement au voisinage de la face 3 et au voisinage de la face 4 de la plaque 1. Ces espaces annulaires 12 et 14 sont donc en communication avec l'interstice existant entre la surface extérieure du tube 2 et la surface intérieure du trou 5.

Pour tous les tubes 2 du faisceau, les espaces annulaires inférieurs 12 et les espaces annulaires supérieurs 14 sont usinés au même niveau dans la plaque 1, si bien que ces espaces annulaires peuvent être reliés par des canaux de jonction 15 et 17 sensiblement horizontaux pour les espaces annulaires 12 et 14 respectivement.

Ainsi qu'il est visible sur les figures 2 et 3, ces canaux de jonction 15 et 17 ont une direction radiale par rapport aux tubes 2, c'est-à-dire qu'ils passent par les axes ZZ' des tubes 2 et correspondent chacun à une rangée de tubes, dans une des directions principales du réseau triangulaire des trous 5 de la plaque tubulaire 1.

Les canaux 17 représentés sur la figure 2a et sur la partie gauche de la figure 3 sont tous parallèles et ont pour direction la direction principale D1 du réseau.

Ainsi qu'il est visible sur la figure 2b et sur la partie droite de la figure 3, les canaux 15 sont tous parallèles et ont pour direction une direction principale D2 du réseau des trous 5 dans la plaque tubulaire 1. Les directions D1 et D2 font un angle de 60°.

Comme il est visible sur les figures 2 et 3, les deux ensembles d'espaces annulaires et de canaux superposés sont donc alignés sur des directions à 60°. Les canaux 15 et 17 sont de très petites dimensions, leur diamètre n'étant limité que par les possibilités d'usinage de ces trous sur de grandes longueurs, dans l'épaisseur de la plaque tubulaire ces canaux pourront avoir un diamètre inférieur ou sensiblement égal à 5 mm. La largeur des espaces annulaires sera de l'ordre du mm ou même très sensiblement inférieure.

A l'une des extrémités de chacun des canaux 17 est fixé de façon étanche un conduit de mesure 18, lui-même relié à un détecteur 19 permettant de déceler de très faibles traces de vapeur d'eau dans le canal 17 correspondant. Les canaux 17 et les conduits 18 sont remplis d'hélium sec et de grande pureté, si bien que les traces de vapeur d'eau décelées par les détecteurs 19 ne peuvent correspondre qu'à une fuite sur l'un des tubes 2 de la rangée dont les espaces annulaires sont reliés par le canal 17 correspondant.

De la même façon, au niveau inférieur, les canaux 15 sont reliés par l'intermédiaire de conduits 20 à des détecteurs de vapeur d'eau 21, les canaux 15 et les conduits 20 étant également remplis d'hélium sec de grande pureté.

Les détecteurs 19 sont tous disposés à l'extérieur de la plaque tubulaire 1 et à l'extérieur du générateur de vapeur, si bien que leur utilisation et leur branchement sur les canaux de mesure se font aisément.

Les détecteurs 19 et 21 sont reliés à des voyants ou à une unité de calcul ou d'enregistrement qui permet un repérage des canaux de mesure dans lesquels de la vapeur d'eau est apparue.

Dans le cas d'une fuite dans une soudure 10 ou sur un tube 2, à l'intérieur de la plaque 1, de la vapeur d'eau parvient dans les espaces annulaires 12 et 14 et se propage dans les canaux 15 et 17 correspondants. Les détecteurs 19 et 21 de la rangée de direction D1 et de la rangée de direction D2 respectivement sur lesquelles se trouve la soudure 10 ou le tube 2 défectueux sont donc activés et l'on effectue un repérage immédiat des deux canaux correspondants chacun des canaux porte un numéro d'identification et chacun des tubes est donc défini par les numéros d'identification des deux canaux de mesure passant par ces espaces annulaires 12 et 14. On en déduit immédiatement une localisation du tube défectueux par ses coordonnées dans le système d'axes D1-D2. De la même façon, dans le cas ou une soudure 9 présente un défaut entraînant une fuite de sodium entre le tube 2 correspondant et la plaque tubulaire, cette fuite peut être détectée et le tube peut être identifié.

Le dispositif permet donc non seulement une détection très rapide d'une fuite dans une soudure tube-plaque ou sur l'un des tubes du faisceau tubulaire mais encore un repérage et une localisation matricielle de ce tube, sans avoir à effectuer d'opérations complémentaires telles que le déplacement d'une sonde de mesure à l'intérieur d'un canal.

Les canaux de mesure 15 ou 17 ont comme longueur maximale le diamètre de la plaque tubulaire, par exemple 870 mm dans le cas d'une plaque tubulaire pour un faisceau de quatre cent quatre-vingt-dix-neuf tubes disposés suivant un réseau au pas triangulaire de 35 mm. D'autre part, ces canaux ont un diamètre faible, ce qui entraîne un affaiblissement négligeable de la plaque tubulaire. Le fait que ces canaux traversent les espaces annulaires prévus dans les trous 5 d'une rangée de tubes facilite, d'une part, leur perçage et, d'autre part, permet de choisir le pas entre tubes sans tenir compte de la présence des canaux de détection.

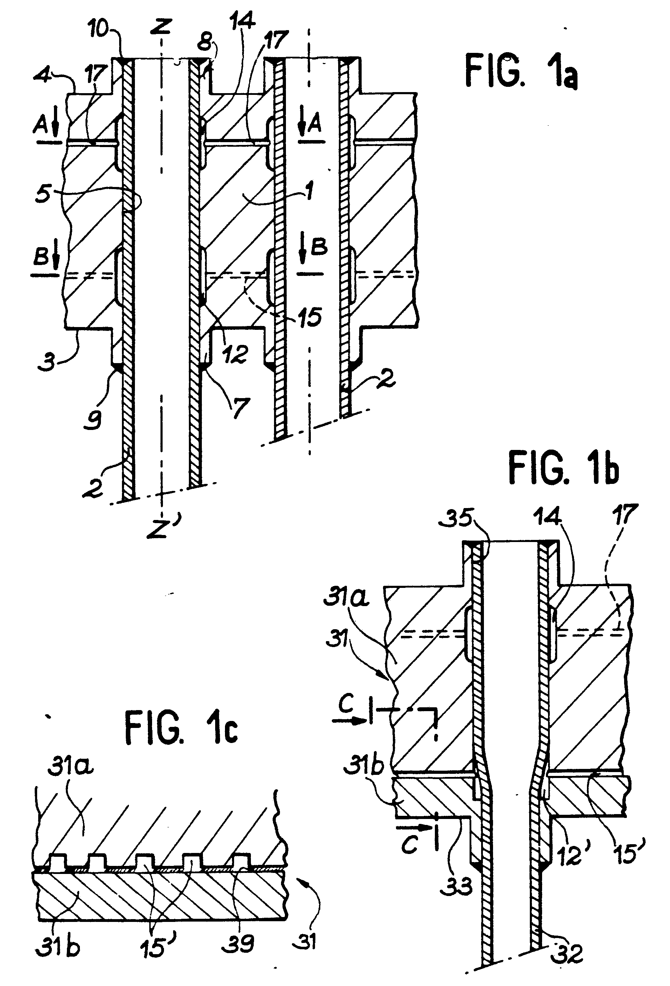

Sur les figures 1b et 1c, on voit un mode de réalisation différent des espaces annulaires 12' et des canaux 15' de l'ensemble inférieur de détection.

Les espaces annulaires 14 et les canaux 17 de l'ensemble supérieur sont usinés de la même façon que dans le mode de réalisation représenté sur la figure 1a.

La plaque tubulaire 31 représentée sur les figures 1b et 1c est constituée de deux plaques superposées 31a et 31b. Dans la partie 31a de la plaque tubulaire 31, les trous 35 disposés suivant un reseau régulier à mailles triangulaires ont un diamètre constant alors que dans la partie inférieure 31b de la plaque, ces trous ont un diamètre réduit vers la face de sortie 33 de la plaque tubulaire. Le tube 32 placé dans le trou 35 est élargi dans sa partie située dans la plaque supérieure 31a. Le diamètre courant du tube correspond à la partie à faible diamètre du trou 35 à l'intérieur de la partie 31b de la plaque tubulaire. On réserve de cette façon un espace annulaire 12' entre le tube 32 et le trou 35.

Comme il est visible sur les figures 1b et 1c, les canaux de mesure 15' joignant les espaces annulaires 12' sont constitués par des rainures usinées dans la plaque supérieure 31a, la plaque 31b plane étant jointe de façon étanche à la plaque 31a sur les parties en saillie ce cette plaque 31a disposées entre les rainures 15', au moyen d'un métal de brasure 39.

Lorsqu'on utilise une plaque tubulaire en deux parties, on peut donc éviter le perçage d'au moins un des ensembles de canaux.

Il est bien évident que le dispositif représenté aux figures 1b et 1c fonctionne de la même façon que le dispositif représenté à la figure 1a et suppose des conduits de mesure et des détecteurs tels que représentés sur la figure 3.

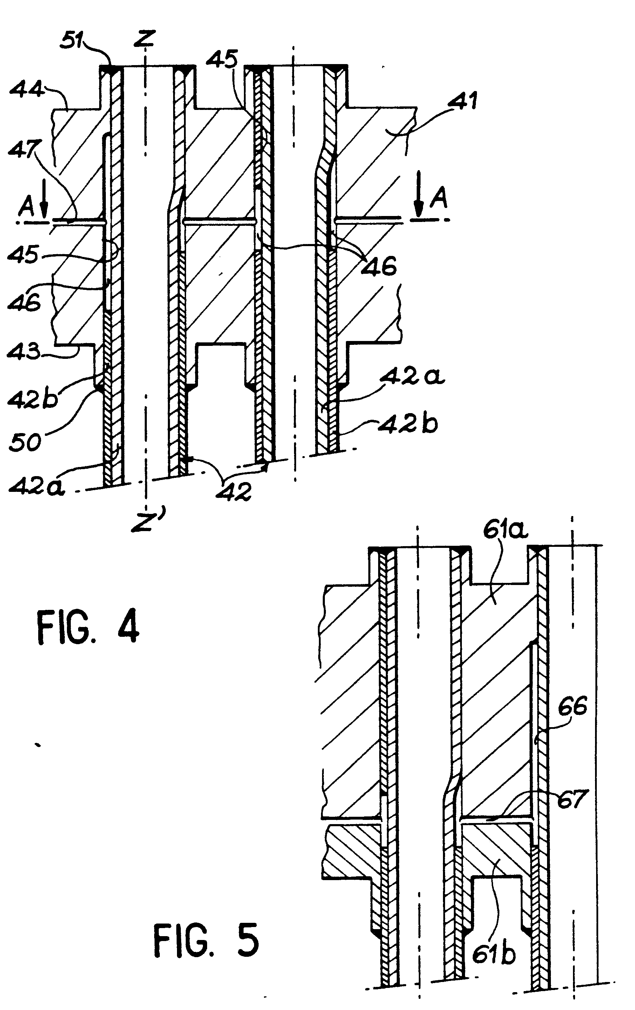

Sur la figure 4, on voit une partie d'une plaque tubulaire 41 monobloc traversée par des tubes à double paroi 42. De tels tubes à double paroi sont constitués par un tube interne 42a sur lequel est enfilé un tube coaxial 42b, le contact entre les surfaces des parois 42a et 42b pouvant être assuré mécaniquement ou métallurgiquement. Il existe un ensemble de passages libres pour le fluide entre les deux parois, constitués par le jeu permettant d'enfiler les parois l'une sur l'autre coaxialement, par les rugosités des surfaces en contact et, éventuellement, par des rainures usinées le long de l'une des surfaces en contact. L'ensemble des passages libres est appelé interstice.

Un générateur de vapeur comportant un faisceau de tubes à doub le paroi été décrit en particulier dans le document FR-A-2 540 971.

Dans un tel générateur de vapeur, chaque tube est fixé à l'une de ses extrémités dans une plaque tubulaire limitant la boîte de distribution d'eau dans les tubes et à son autre extrémité dans une seconde plaque tubulaire limitant le collecteur permettant la récupération de la vapeur produite dans le générateur.

Sur la figure 4, on a représenté l'une des deux plaques tubulaires 41 dont la face supérieure 44 est en contact avec l'eau ou la vapeur d'eau et la face inférieure 43 avec le sodium liquide en circulation dans le générateur de vapeur. Les extrémités des tubes 42 sont engagées dans les plaques tubulaires de façon que leur extrémité débouche dans la boîte à eau ou dans le collecteur de vapeur.

Sur la figure 4, on a représenté divers modes de réalisation des éléments constitutifs du dispositif de détection de fuite sur ces tubes à double paroi.

L'ensemble du dispositif de détection et de localisation de fuite peut être décrit en se référant à la figure 4 et aux figures 2 et 3, la figure 2a représentant une coupe suivant AA de la figure 4, c'est-à-dire une coupe dans une plaque tubulaire et la figure 2b représentant une coupe analogue à travers l'autre plaque tubulaire dans laquelle sont fixées les extrémités des tubes 42 opposées aux extrémités représentées sur la figure 4. La figure 3 représente dans sa partie gauche la disposition des canaux et détecteurs de mesure de l'une des plaques tubulaires et dans sa partie droite la disposition des canaux et détecteurs de l'autre plaque tubulaire.

On ne décrira que les canaux et espaces annulaires disposés dans la plaque tubulaire 41 mais il est bien entendu que la disposition des espaces annulaires et des canaux de mesure est exactement semblable dans la plaque tubulaire recevant les extrémités opposées des tubes 42.

Chacun des tubes est entouré, à l'intérieur de la plaque tubulaire 41 par un espace annulaire 46 coaxial au tube 42.

En se reportant à la figure 2a, on voit que les espaces annulaires 46 des tubes disposés suivant une rangée dans une direction principale D1 du réseau sont reliés par des canaux de mesure 47 joignant deux espaces annulaires de deux tubes successifs. Les canaux de mesure 47, comme les canaux de mesure 17 des tubes simples du mode de réalisation décrit précédemment, sont de direction radiale, tous parallèles et tous disposés dans la direction de D1.

En se reportant à la figure 2b, on voit que dans la plaque tubulaire disposée à l'extrémité opposée des tubes 42, les espaces annulaires 46' entourant les tubes 42 sont reliés par des canaux de mesure 47' de direction radiale et parallèles à la direction D2. D1 et D2 sont, comme précédemment, des directions principales du réseau, c'est-à-dire que D1 et D2 sont disposés à 60°.

L'interstice entre les parois tubulaires 42a et 42b constituant le tube à double paroi communique à l'une de leurs extrémités avec les espaces annulaires 46 et donc avec les canaux 47 correspondants de la plaque tubulaire 41 et à leur autre extrémité avec les espaces annulaires 46' et les canaux 47' de la plaque opposée 41'.

Dans le cas où l'une des parois d'un tube 42 présente une fissure sur toute son épaisseur, de la vapeur d'eau ou de la vapeur de sodium se propage dans l'espace intersticiel entre les deux parois, puis dans les espaces annulaires 46 et 46' et les canaux 47 et 47'.

Comme il est visible sur la figure 3, les canaux 47 (ou 47') sont reliés à l'une de leurs extrémités à des détecteurs de vapeur d'eau 49 (ou 49') disposés à l'extérieur de la plaque 41 (ou 41') par l'intermédiaire de conduits 48 (ou 48').

Une fuite de sodium ou de vapeur d'eau due à une fissure dans l'une des enveloppes 42a ou 42b d'un tube 42 va donc se traduire par une détection au niveau d'un détecteur 49 et simultanément au niveau d'un détecteur 49'.

Etant donné la disposition des canaux 47 et 47' correspondants, on peut déterminer sans ambiguïté par repérage matriciel le tube défectueux.

Comme dans le cas d'un tube à simple paroi, on pourra donc non seulement détecter la présence d'une fuite, mais encore localiser rapidement le tube présentant cette fuite.

Sur la figure 4 on voit divers modes de réalisation des espaces annulaires 46. Sur la partie gauche du tube de gauche, cet espace annulaire 46 est constitué par un espace ménagé au-dessus de la paroi externe 42b du tube, à l'intérieur d'une partie élargie du trou 45 ménagé dans la plaque tubulaire 41. Cet espace 46 est fermé par le rebord limitant la partie élargie du trou 45.

Sur la partie droite du tube de gauche, l'espace annulaire 46 est limité à sa partie supérieure par un élargissement de la paroi 42a du tube et à sa partie inférieure par la paroi 42b du tube. Dans tous les cas, la paroi externe 42b est reliée par une soudure 50 à une manchette solidaire de la face inférieure 43 de la plaque tubulaire et la paroi interne 42a est liée par soudure à une manchette solidaire de la face supérieure 44 de la plaque tubulaire 41.

Sur la partie gauche du tube de droite, l'espace annulaire 46 est limité par deux sections espacées suivant la direction ZZ', de la paroi externe 42b.

Enfin, sur la partie de droite du tube de droite, l'espace annulaire 46 est représenté de la même façon que dans la partie de droite du tube de gauche.

Il est bien évident que sur chacun des tubes et même sur l'ensemble des tubes dans une plaque tubulaire, on adoptera un mode de réalisation ou un autre des espaces annulaires.

Sur la figure 5, on voit une plaque tubulaire 61 constituée par deux parties superposées 61a et 61b.

Dans ce cas, comme dans le cas de la plaque représentée sur les figures 1b et 1c, les canaux 67 joignant les espaces annulaires 66 sont réalisés en pratiquant un rainurage dans la plaque supérieure 61a et en fixant cette plaque supérieure sur la plaque inférieure 61b ayant une surface plane de façon que les parties en saillie de la plaque 61a entre les rainures 67 s'appuient sur la plaque inférieure 61b et soient brasées sur la surface plane supérieure de cette plaque 61b.

En combinaison avec ces canaux de mesure 67, on peut réaliser les espaces annulaires suivant l'un des modes décrits en se référant à la figure 4.

Dans ce cas également le dispositif comprendra un ensemble de canaux parallèles à une direction principale du réseau des tubes dans chacune des plaques disposées aux extrémités des tubes. Des détecteurs permettront comme précédemment un repérage au niveau de chacune des plaques tubulaires des canaux recevant un fluide de fuite, ce qui permet un repérage matriciel des tubes défectueux.

Les principaux avantages du dispositif suivant l'invention sont donc de permettre, grâce à un dispositif très simple, simultanément la détection de fuite et la localisation d'un tube défectueux, dans un générateur de vapeur. Cette détection et cette localisation se font sans utiliser de moyens ou d'enceintes de mesure à l'intérieur du générateur de vapeur et sans nécessiter le déplacement de sondes de mesure dans des canaux traversant les plaques tubulaires.

L'invention ne se limite pas aux modes de réalisation qui viennent d'être décrits ; elle en comporte au contraire toutes les variantes.

C'est ainsi qu'on peut réaliser les espaces annulaires et les canaux de mesure d'une manière quelconque. Dans le cas des tubes à double paroi où chaque plaque tubulaire ne comporte qu'un ensemble de canaux, on usinera les canaux dans le plan de la fibre neutre de la plaque, c'est-à-dire dans une zone de la plaque tubulaire ne subissant ni extension, ni compression. On peut réaliser les espaces annulaires d'une façon différente de celles qui ont été décrites et par exemple, sans usinage de la plaque tubulaire. On peut, par exemple, prévoir une zone du tube ou de l'alésage de la plaque recevant le tube, d'une rugosité suffisante pour qu'un interstice annulaire subsiste entre le tube et la plaque sur la hauteur de la zone à forte rugosité. On peut également usiner une gorge sur la surface extérieure du tube sur une petite partie de sa longueur, dans la zone de ce tube située dans la plaque tubulaire. On peut utiliser des détecteurs de vapeur d'eau ou de vapeur de sodium de tout type, à partir du moment où leur sensibilité est suffisante. Les espaces dans lesquels on effectue la mesure peuvent être remplis indifféremment d'un gaz tel que l'hélium ou un autre gaz adapté.

On pourra exploiter les mesures effectuées par les détecteurs d'une façon quelconque, manuelle ou automatique, pour obtenir un affichage ou un enregistrement des données relatives à la détection et à la localisation des fuites, par des moyens de repérage et d'affichage appropriés.

Enfin, le dispositif suivant l'invention s'applique à tous les générateurs de vapeur comportant un faisceau et au moins une plaque tubulaire dans laquelle sont engagés les tubes du faisceau. Dans le cas d'un faisceau à tubes à double paroi, on disposera cependant obligatoirement d'un ensemble d'espaces annulaires et de canaux de mesure à chacune des extrémités du tube pour effectuer dans tous les cas la localisation des tubes défectueux. Un seul ensemble d'espaces annulaires et de canaux de mesure ne permettrait qu'une détection sans localisation des tubes défectueux.

## Revendications

1. Dispositif de détection et de localisation de fuite sur les tubes d'un faisceau de générateur de vapeur, comportant au moins une plaque tubulaire (1) dans laquelle les tubes du faisceau (2) sont fixés suivant un réseau régulier de façon qu'ils traversent tout ou partie de l'épaisseur de la plaque tubulaire (1), pour déboucher d'un côté de la plaque tubulaire (1) dans une zone constituant une boîte à eau ou un collecteur de vapeur et qu'ils pénètrent, de l'autre côté de la plaque tubulaire (1), dans une zone renfermant un fluide d'échange apportant la chaleur de vaporisation, avec lequel les tubes (2) sont en contact par leur surface externe, ce dispositif comportant:
- pour chacun des tubes (2), dans une zone où ce tube (2) est à l'intérieur de la plaque tubulaire (1), deux espaces annulaires (12, 14) coaxiaux au tube (2) et espacés suivant sa longueur, de façon que les espaces annulaires (12, 14) relatifs à tous les tubes (2) du faisceau constituent deux ensembles situés dans deux zones différentes espacées suivant la direction axiale des tubes (2),
- deux ensembles de canaux de jonction (15, 17) entre les espaces annulaires (12, 14) des tubes (2) d'une même rangée correspondant chacun à un ensemble d'espaces annulaires (12, 14), les canaux (15 ou 17) d'un ensemble étant entièrement isolés les uns des autres, tous parallèles et disposés suivant une direction du réseau des tubes (2),
- et des détecteurs de fluide (19, 21) disposés à l'extérieur de la plaque tubulaire (1) et associés chacun à l'un des canaux (15, 17) de façon que chaque canal soit relié à un détecteur à l'une au moins de ses extrémités, caractérisé par le fait que:
- chacun des canaux de jonction (15, 17) relie les espaces annulaires (12, 14) d'une seule rangée de tubes ; et que
- les canaux (15, 17) des deux ensembles sont orientés selon deux directions différentes.

2. Dispositif de détection et de localisation de fuite suivant la revendication 1, dans le cas de tubes (42) à double paroi fixes chacun à l'une de leurs extrémités, dans une première plaque tubulaire (41) et à leur autre extrémité dans une seconde plaque tubulaire (41'), caractérisé par le fait qu'il comporte, dans la première plaque tubulaire (41), un premier ensemble d'espaces annulaires (46 ) et de canaux de mesure (47) suivant une première direction principale du réseau des tubes et, à l'intérieur de la seconde plaque tubu laire (41'), un second ensemble d'espaces annulaires (46') et de canaux de mesure (47') les reliant entre eux, dirigés suivant une seconde direction principale du réseau des tubes du faisceau, l'interstice entre les deux parois (42a et 42b) de chacun des tubes (42) étant en communication à l'une de ces extrémités avec un espace annulaire (46) dans la première plaque tubulaire (41) et à son autre extrémité avec un espace annulaire (46') dans la seconde plaque tubulaire (41').

3. Dispositif de détection et de localisation de fuite suivant l'une quelconque des revendications 1 et 2, caractérisé par le fait que les canaux de mesure (15, 17, 47, 47') ont une direction radiale par rapport aux tubes, c'est-à-dire passent par les axes 22' de ces tubes.

4. Dispositif de détection et de localisation de fuite suivant la revendication 1, dans le cas d'un faisceau constitué par des tubes (2) à simple paroi, caractérisé par le fait que les deux ensembles d'espaces annulaires (12, 14) et de canaux de mesure (15, 17) sont disposés à l'intérieur d'une même plaque tubulaire (1).

5. Dispositif de détection et de localisation de fuite suivant la revendication 1, dans le cas d'un faisceau constitué par des tubes (2) à simple paroi, caractérisé par le fait que les deux ensembles d'espaces annulaires sont disposés l'un dans une première plaque tubulaire et l'autre dans une seconde plaque tubulaire, la localisation des tubes (2) présentant une fuite se faisant uniquement par rangée.

6. Dispositif de détection et de localisation de fuite suivant l'une quelconque des revendications 4 et 5, caractérisé par le fait que les espaces annulaires (12, 14) sont constitués par une partie à diamètre élargi des trous (5) dans lesquels sont engagés les tubes (2).

7. Dispositif de détection et de localisation de fuite suivant l'une quelconque des revendications 4 et 5, caractérisé par le fait que les espaces annulaires (12') sont limités par un élargissement diamétral du tube (32) à l'intérieur d'une partie élargie diamétralement du trou (35) traversant la plaque tubulaire (31) dans lequel est engagé le tube (32).

8. Dispositif de détection et de localisation de fuite suivant l'une quelconque des revendications 4 et 5, caractérisé par le fait que les espaces annulaires sont constitués par des interstices subsistant entre des parties à forte rugosité du tube (2) et/ou du trou (5) de la plaque tubulaire (1).

9. Dispositif de détection et de localisation de fuite suivant l'une quelconque des revendications 4 et 5, caractérisé par le fait que les espaces annulaires sont réalisés en usinant une gorge sur la surface externe du tube (2) dans la zone de ce tube (2) venant dans le trou (5) de la plaque tubulaire (1).

10. Dispositif de détection et de localisation de fuite suivant la revendication 2, caractérisé par le fait que les espaces annulaires (46) sont limités, à l'intérieur d'une partie élargie du trou (45) dans lequel est engagé le tube (42) à double paroi, par la partie supérieure de la paroi externe (42b, du tube (42) et par un rebord usiné à l'intérieur de la plaque tubulaire (41) limitant la partie élargie du trou (45).

11. Dispositif de détection et de localisation de fuite suivant la revendication 2, caractérisé par le fait que chaque espace annulaire (46) est limité, dans le trou (45) de passage du tube (42) ne comportant pas d'élargissement diamétral, par la partie supérieure de la paroi externe (42b) du tube (42) et par un élargissement diamétral du tube (42).

12. Dispositif de détection et de localisation de fuite suivant la revendication 2, caractérisé par le fait que chaque espace annulaire (46) est limité, dans un trou de passage (45) du tube (42), sans élargissement diamétral, par deux parties successives et écartées dans la direction de l'axe du tube, de la paroi externe (42b) du tube (42).

13. Dispositif de détection suivant l'une quelconque des revendications 1, 2 et 3 dans le cas où chaque plaque tubulaire (1) ne comporte qu'un ensemble de canaux, caractérisé par le fait que ces canaux sont usinés dans le plan de la fibre neutre de la plaque tubulaire (1).

14. Dispositif de détection et de localisation de fuite suivant l'une quelconque des revendications 1 à 13, dans le cas d'une plaque tubulaire constituée par deux plaques superposées (31a, 31b) ou (61a, 61b), caractérisé par le fait que les canaux (15' ou 67) sont constitués par des rainures usinées dans l'une des plaques (31a ou 61a) séparées par des parties en saillie assemblées de façon étanche à la surface de contact correspondante plane de l'autre plaque (31b ou 61b).

15. Dispositif de détection et de localisation de fuite suivant l'une quelconque des revendications 1 à 14, caractérisé par le fait que les détecteurs (19, 21, 49, 49') sont reliés à des moyens de détermination et d'affichage permettant un repérage des tubes défectueux.

**Claims**

1. System for the detection and location of leakage in the cluster of tubes in a steam generator, having at least one tube plate (1) in which the tubes of the cluster (2) are fixed according to a regular lattice such that they traverse all or part of the thickness of the tube plate (1) to open on one side of the tube plate (1) in a zone constituting a water box or a steam collector, and such that they penetrate, on the other side of the tube plate (1) into a zone containing an exchange liquid providing the heat of evaporation, with which the tubes (2) are in contact at their outer surface, characterized by the fact that it includes:
- for each of the tubes (2), in a zone in which this tube (2) is inside the tube plate (1), two annular spaces (12, 14) coaxial with the tube (2) and spaced along its length, such that the annular spaces (12, 14) relating to all the tubes (2) of the cluster constitute two systems situated in two different zones spaced according to the axial direction of the tubes (2),
- two systems of connecting passages (15, 17) between the annular spaces (12, 14) of the tubes (2) of a same row corresponding each to one system of annular spaces (12, 14), the passages (16 or 17) of one system being entirely isolated from one another, all parallel, and disposed in one direction of the lattice of the tubes (2),
- and fluid detectors (19, 21) disposed on the outside of the tube plate (1) and associated each with one of the passages (15, 17), such that each passage is connected to a detector at at least one of its extremities,
- each of the junction passages (15, 17) connects the annular spaces (12, 14) of a single row of tubes and the passages (15, 17) of the two assemblies are oriented in two different directions.

2. System for the detection and location of leakage in accordance with claim 1, in the case of double-wall tubes (42) each affixed at one of their extremities in a first tube plate (41) and at their other extremities in a second tube plate (41'), characterized by the fact that it includes, in the first tubular plate (41), a first system of annular spaces (46) and measuring passages (47) in a first principal direction of the lattice of tubes and, within the second tube plate (41'), a second system of annular spaces (46') and measuring passages (47') connecting them to one another, directed in a second principal direction of the lattice of the tubes of the cluster, the interstice between the two walls (42a and 42b) of each of the tubes (42) being in communication at one of its extremities with an annular space (46) in the first tubular plate (41) and at its other extremity with an annular space (46') in the second annular plate (41').

3. System for the detection and location of leakage according to either of claims 1 and 2, characterized by the fact that the measuring passages (15, 17, 47, 47') have a radial direction with respect to the tubes, i.e. passing through the axes Z-Z' of these tubes.

4. System for the detection and location of leakage according to claim 1, in the case of a cluster constituted by single-wall tubes (2), characterized by the fact that the two systems of annular spaces (12, 14) and measuring passages (15, 17) are disposed in the interior of the same tube plate (1).

5. System for the detection and location of leakage according to claim 1, in the case of a cluster constituted by single-wall tubes (2), characterized by the fact that the two systems of annular spaces are disposed one in a first tube plate and the other in a second tube plate, the location of the tubes (2) having leakage being performed only by row.

6. System for the detection and location of leakage according to either of claims 4 and 5, characterized by the fact that the annular spaces (12, 14) are constituted by a portion of enlarged diameter of the holes (5) in which the tubes (2) are engaged.

7. System for the detection and location of leakage according to either of claims 4 and 5, characterized by the fact that the annular spaces (12') are defined by a diametral enlargement of the tube (32) within a diametrally enlarged portion of the hole (35) traversing the tube plate (31) in which [hole] the tube (32) is engaged.

8. System for the detection and location of leakage according to either of claims 4 and 5, characterized by the fact that the annular spaces are constituted by interstices subsisting between portions of great roughness of the tube (2) and/or of the hole (5) in the tube plate (1).

9. System for the detection and location of leakage according to either of claims 4 and 5, characterized by the fact that the annular spaces are created by machining a circumferential groove on the outside surface of the tube (2) in the zone of this tube (2) coming within the hole (5) of the tube plate (1).

10. System for the detection and location of leakage according to claim 2, characterized by the fact that the annular spaces (46) are defined, within a widened portion of the hole (45) in which the double-wall tube (42) is engaged, by the upper portion of the outside wall (42b) of the tube (42) and by a shoulder machined within the tube plate (41) limiting the widened portion of the hole (45).

11. System for the detection and location of leakage according to claim 2, characterized by the fact that each annular space (46) is defined, in the hole (45) for the passage of the tube (42) not having any diametral enlargement, by the upper part of the outside wall (42b) of the tube (42) and by a diametral enlargement of the tube (42).

12. System for the detection and location of leakage according to claim 2, characterized by the fact that each annular space (46) is defined, in a passage hole (45) of the tube (42), without diametral enlargement, by two successive portions spaced apart in the direction of the axis of the tube, of the outside wall (42b) of the tube (42).

13. System for detection according to any of claims 1, 2 and 3, in the case in which each tube plate (1) has only one set of passages, characterized by the fact that these passages are machined in the plane of the neutral fibre of the tube plate (1).

14. System for the detection and location of leakage according to any of claims 1 to 13, in the case of a tube plate constituted by two superimpoed plates (31a, 31b) or (61a, 61b), characterized by the fact that the passages (15' or 67) are constituted by grooves machined in one of the plates (31a or 61a) separated by projecting portions assembled in a leakproof manner to the corresponding flat contact surface of the other plate (31b or 61b).

15. System for the detection and location of leakage according to any of claims 1 to 14, characterized by the fact that the detectors (19, 21, 49, 49') are connected to display and determination means permitting an identification of the defective tubes.

**Patentansprüche**

1. Vorrichtung zum Feststellen und Lokalisieren von Leckage an Rohren eines Dampferzeuger-Rohrbündels mit wenigstens einer Rohrwand (1), in welcher die Rohre (2) des Bündels in einer gleichmäßig gitterförmigen Anordnung derart befestigt sind, daß sie die Rohrwand (1) ganz oder über einen Teil ihrer Stärke durchsetzen und an einer Seite der Rohrwand (1) in einem Raum ausmünden, welcher einen Wasserbehälter oder einen Dampfsammelraum darstellt, und an der anderen Seite der Rohrwand (1) in einen Raum hineinragen, welcher ein die Verdampfungswärme lieferndes Wärmetauscherfluid enthält, mit welchem die Rohre (2) mit ihrer äußeren Oberfläche in Berührung stehen, wobei die genannte Vorrichtung folgende Einrichtungen umfaßt: für jedes Rohr (2) zwei in einem Bereich, in welchem das betreffende Rohr (2) in der Rohrwand (1) gehalten ist, ausgebildete, mit dem Rohr (2) koaxiale und in Längsrichtung desselben beabstandete Ringräume (12, 14), welche derart angeordnet sind, das die allen Rohren (2) des Bündels zugeordneten Ringräume (12, 14) zwei Gruppen bilden, welche in zwei verschiedenen, in Axialrichtung der Rohre (2) beabstandeten Bereichen angeordnet sind, zwei Anordnungen von Verbindungskanälen (15, 17) zwischen den Ringräumen (12, 14) der Rohre (2) jeweils einer Reihe, welche jeweils einer Anordnung von Ringräumen (12, 14) zugeordnet sind, wobei die Kanäle (15 oder 17) einer Anordnung vollständig voneinander getrennt sind und parallel zueinander in einer Richtung der gitterförmigen Anordnung der Rohre (2) verlaufen, und außerhalb der Rohrwand (1) angeordnete Fluidsensoren (19, 21), welche jeweils einem der Kanäle (15, 17) derart zugeordnet sind, daß jeder Kanal an wenigstens einem seiner Enden mit einem Sensor verbunden ist, dadurch gekennzeichnet, daß jeder der Verbindungskanäle (15, 17) die Ringräume (12, 14) einer einzigen Reihe von Rohren miteinander verbindet und daß die Kanäle (15, 17) in den beiden Anordnungen in zwei verschiedenen Richtungen ausgerichtet sind.

2. Vorrichtung zum Feststellen und Lokalisieren von Leckage nach Anspruch 1, zur Verwendung mit doppelwandigen Rohren (42), welche jeweils an einem Ende in einer ersten Rohrwand (41) und am anderen Ende in einer zweiten Rohrwand (41') befestigt sind, dadurch gekennzeichnet, daß sie in der ersten Rohrwand (41) eine erste Anordnung von Ringräumen (46) und von Meßkanälen (47) aufweist, welche in einer ersten Hauptrichtung der gitterförmigen Anordnung der Rohre verlaufen, und in der zweiten Rohrwand (41') eine zweite Anordnung von Ringräumen (46') und diese miteinander verbindenden Meßkanälen (47'), welche in einer zweiten Hauptrichtung der gitterförmigen Anordnung der Rohre verlaufen, wobei der Zwischenraum zwischen den beiden Wänden (42a und 42b) jedes Rohrs (42) an einem seiner Enden mit einem Ringraum (46) in der ersten Rohrwand (41) und an seinem anderen Ende mit einem Ringraum (46') in der zweiten Rohrwand (41') in Strömungsverbindung steht.

3. Vorrichtung zum Feststellen und Lokalisieren von leckage nach einem der Ansprüche 1 und 2, dadurch gekennzeichnet, daß die Meßkanäle (15, 17, 47, 47') in bezug auf die Rohre radial ausgerichtet sind, d.h. daß sie die Z-Z-Achsen der Rohre durchsetzen.

4. Vorrichtung zum Feststellen und Lokalisieren von Leckage nach Anspruch 1, zur Verwendung mit einem Bündel aus Rohren (2) mit einfacher Wandung, dadurch gekennzeichnet, daß die beiden Anordnungen von Ringräumen (12, 14) und Meßkanälen (15, 17) in ein und derselben Rohrwand (1) ausgebildet sind.

5. Vorrichtung zum Feststellen und Lokalisieren von Leckage nach Anspruch 1, zur Verwendung mit einem Bündel aus Rohren (2) mit einfacher Wandung, dadurch gekennzeichnet, daß von den beiden Anordnungen von Ringräumen die eine in einer ersten Rohrwand und die andere in einer zweiten Rohrwand ausgebildet ist und daß sich die Lokalisierung von eine Leckage aufweisenden Rohren (2) ausschließlich anhand der einzelnen Reihen vollzieht.

6. Vorrichtung zum Feststellen und Lokalisieren von Leckage nach einem der Ansprüche 4 und 5, dadurch gekennzeichnet, daß die Ringräume (12, 14) jeweils durch einen einen vergrößerten Durchmesser aufweisenden Abschnitt der die Rohre (2) aufnehmenden Bohrungen (5) gebildet sind.

7. Vorrichtung zum Feststellen und Lokalisieren von Leckage nach einem der Ansprüche 4 und 5, dadurch gekennzeichnet, daß die Ringräume (12') jeweils durch eine diametrale Erweiterung (32) des jeweiligen Rohrs in einem diametral erweiterten Abschnitt der die Rohrwand (31) durchsetzenden und das jeweilige Rohr (32) aufnehmenden Bohrung (35) begrenzt sind.

8. Vorrichtung zum Feststellen und Lokalisieren von Leckage nach einem der Ansprüche 4 und 5, dadurch gekennzeichnet, daß die Ringräume durch Zwischenräume zwischen eine große Rauhigkeit aufweisenden Bereichen des Rohrs (2) und/oder der Bohrung (5) der Rohrwand (1) gebildet sind.

9. Vorrichtung zum Feststellen und Lokalisieren von Leckage nach einem der Ansprüche 4 und 5, dadurch gekennzeichnet, daß die Ringräume durch spanende Bearbeitung der Rohre (2) zur Ausbildung einer Hohlkehle in dem in der Bohrung (5) der Rohrwand (1) Aufnahme findenden Bereich der Außenfläche des Rohrs (2) gebildet sind.

10. Vorrichtung zum Feststellen und Lokalisieren von Leckage nach Anspruch 2, dadurch gekennzeichnet, daß die Ringräume (46) in einem erweiterten Abschnitt der Bohrung (45), in welcher das doppelwandige Rohr (42) gehalten ist, durch den oberen Bereich der äußeren Wandung (42b) des Rohrs (42) und eine in der Rohrwand (41) ausgebildete Stufe begrenzt sind, welche den erweiterten Abschnitt der Bohrung (45) abschließt.

11. Vorrichtung zum Feststellen und Lokalisieren von Leckage nach Anspruch 2, dadurch gekennzeichnet, daß jeder Ringraum (46) in der vom jeweiligen Rohr (42) durchsetzten Bohrung (45), welche keine diametrale Erweiterung aufweist, durch den oberen Bereich der äußeren Wandung (42b) des Rohrs (42) und durch eine diametrale Erweiterung des Rohrs (42) begrenzt ist.

12. Vorrichtung zum Feststellen und Lokalisieren von Leckage nach Anspruch 2, dadurch gekennzeichnet, daß jeder Ringraum (46) in einem vom jeweiligen Rohr (42) durchsetzten Bohrung (45), welche keine diametrale Erweiterung aufweist, durch zwei in Richtung der Achse des Rohrs beabstandet aufeinander folgende Abschnitte der äußeren Wandung (42b) des Rohrs (42) begrenzt ist.

13. Vorrichtung zum Feststellen und Lokalisieren von Leckage nach einem der Ansprüche 1, 2 und 3, bei welcher jede Rohrwand (1) nur eine Anordnung von Kanälen aufweist, dadurch gekennzeichnet, daß die Kanäle in der Ebene der neutralen Faser der Rohrwand (1) ausgearbeitet sind.

14. Vorrichtung zum Feststellen und Lokalisieren von Leckage nach einem der Ansprüche 1 bis 13, bei welcher eine Rohrwand aus zwei aufeinandergelegten Platten (31a, 31b oder 61a, 61b) gebildet ist, dadurch gekennzeichnet, daß die Kanäle (15' oder 67) durch in einer der Platten (31a oder 61a) ausgearbeitete und durch Stege voneinander getrennte Nuten und durch abdichtendes Anlegen der betreffenden Platte an eine ebene Anlagefläche der anderen Platte (31b oder 61b) gebildet sind.

15. Vorrichtung zum Feststellen und Lokalisieren von Leckage nach einem der Ansprüche 1 bis 14, dadurch gekennzeichnet, daß die Sensoren (19, 21, 49, 49') mit Auswert- und Anzeigeeinrichtungen verbunden sind, welche die Reparatur von schadhaften Rohren ermöglichen

FIG. 1a

FIG. 1b

FIG. 1c

FIG. 3

FIG. 2a

FIG. 2b

0 148 699

FIG. 4

FIG. 5